# FASCICULE DE BREVET EUROPEEN

(11) **EP 2 649 299 B1**
(45) Date de publication et mention de la délivrance du brevet: **18.10.2017**
(21) Numéro de dépôt: 11794552.7
(22) Date de dépôt: 15.11.2011
(51) Int. Cl.: F02N 11/08, H01F 38/00, H02P 1/04

(54) **CIRCUIT DE DEMARREUR POUR VEHICULE AUTOMOBILE COMPORTANT UN DISPOSITIF DE REHAUSSEMENT DE TENSION DE BATTERIE ET DEMARREUR EQUIPE**
ANLASSERSCHALTUNG FÜR KRAFTFAHRZEUG MIT EINER VORRICHTUNG ZUR VERSTÄRKUNG DER BATTERIESPANNUNG UND DAMIT AUSGERÜSTETER ANLASSER
STARTER MOTOR CIRCUIT FOR MOTOR VEHICLE COMPRISING A DEVICE FOR STEPPING UP THE BATTERY VOLTAGE AND STARTER SO EQUIPPED

(30) Priorité: 09.12.2010 FR 1060300
(43) Date de publication de la demande: 16.10.2013
(73) Titulaire: Valeo Equipements Electriques Moteur, 94046 Créteil Cedex (FR)
(72) Inventeur: LABBE, Nicolas, F-69003 Lyon (FR)
(86) Numéro de dépôt international: PCT/FR2011/052638
(87) Numéro de publication internationale: WO 2012/076777

(56) Documents cités:
- EP-A1- 2 233 732
- WO-A1-2005/076293
- US-A1- 2002 023 605

## Description

De manière générale, l'invention concerne le domaine des démarreurs pour moteur thermique dans les véhicules automobiles. Plus particulièrement, l'invention concerne la combinaison d'un démarreur et d'un dispositif autorisant un rehaussement de la tension aux bornes de la batterie du véhicule lors de la mise sous tension du démarreur.

Lors de la mise sous tension d'un démarreur pour assurer le démarrage du moteur thermique du véhicule, il se produit un appel de courant important qui est proche du niveau de courant de court-circuit du démarreur, à savoir, un courant de l'ordre de 1000 Ampères. Cet appel de courant à la mise sous tension du démarreur décroît ensuite en intensité à mesure que l'induit du démarreur, correspondant au rotor de la machine, monte en vitesse. Un exemple est divulgué dans la publication de demande de brevet US 2002/0023605. A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 Volt en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 Volt. Pendant le démarrage du moteur thermique, la tension du réseau de bord du véhicule reste ainsi à une valeur suffisante pour garantir le fonctionnement attendu des équipements du véhicule.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées. Cela entraîne une réelle difficulté pour le concepteur car il faudrait pour se situer au-dessus en tension de batterie que le démarreur possède des chutes de tension interne si élevées qu'il n'aurait plus alors la puissance nécessaire pour entraîner à vitesse suffisante le moteur thermique à basse température.

Dans la technique antérieure, des solutions ont été proposées au problème exposé ci-dessus. Une première solution connue de l'entité inventive repose sur l'utilisation de convertisseurs électroniques élévateurs de tension afin d'éviter un niveau de tension trop bas sur le réseau de bord. Un inconvénient majeur de ces convertisseurs réside dans les coûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit de démarrage et limite le pic de courant initial. Dans une seconde phase de fonctionnement, la résistance additionnelle est sortie du circuit de démarrage afin de permettre le passage d'un courant suffisant dans l'induit du démarreur et d'autoriser une montée en vitesse de celui-ci.

Les documents EP2080897A2 et EP2128426A2 décrivent un démarreur du type ci-dessus. Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/Start. En effet, il est demandé à de tels démarreurs de tenir environ 300 000 cycles de démarrage, soit dix fois plus que les 30 000 cycles environ demandés aux démarreurs classiques.

Outre les inconvénients exposés ci-dessus, l'utilisation de cette seconde solution de la technique antérieure peut s'avérer inadaptée lorsque la satisfaction à un gabarit de tension contraignant en termes de temps est demandée par le constructeur automobile. Un tel gabarit comporte généralement un palier bas de tension correspondant au premier seuil de tension indiqué ci-dessus et un palier haut de tension correspondant au second seuil de tension. Une rampe de tension montante est également prévue dans le gabarit entre le palier bas et le palier haut.

Les essais réalisés par l'entité inventive, avec les valeurs usuelles des constructeurs pour la durée du palier bas et la pente de la rampe du gabarit, montrent la difficulté qu'il y a avec cette seconde solution de la technique antérieure de rester dans le gabarit. En effet, il a été constaté un risque de franchissement du gabarit au niveau de sa rampe de tension lorsque la tension de batterie, après s'être redressée une fois le pic initial de courant absorbé, chute à nouveau à la fin de la temporisation, le courant traversant l'induit du démarreur augmentant alors sensiblement du fait la sortie de la résistance de limitation de courant du circuit de démarrage. Après ce franchissement, la tension de batterie peut rester sous le gabarit pendant une certaine durée et ne revenir au-dessus du gabarit qu'après la fin de la rampe de tension montante, alors que l'instant de début du palier haut de tension a déjà été atteint.

Il est donc souhaitable de proposer des perfectionnements aux démarreurs existants de la technique antérieure de manière à supprimer les inconvénients indiqués ci-dessus, notamment pour les applications dans des véhicules automobiles de la fonction d'arrêt/relance automatique du moteur thermique.

Selon un premier aspect, l'invention concerne une combinaison dans un circuit électrique de démarreur pour véhicule automobile d'un démarreur et d'un dispositif de rehaussement de tension de batterie, le démarreur comprenant un moteur électrique et un contacteur électromagnétique et le dispositif de rehaussement de tension de batterie étant destiné à empêcher une chute de la tension de batterie produite par un pic de courant intervenant dans un circuit de puissance du démarreur à la mise sous tension de celui-ci. Conformément à l'invention, le dispositif de rehaussement de tension de batterie est un dispositif de filtrage de type inductif qui est monté en série avec le moteur électrique dans le circuit de puissance et comprenant une carcasse en matériau magnétique, un circuit d'enroulement primaire destiné à s'insérer en série dans le circuit de puissance, et un circuit d'enroulement secondaire en court-circuit.

Selon une caractéristique particulière, la carcasse en matériau magnétique comporte une culasse et des première et seconde pièces de noyau, ces pièces de noyau fermant des ouvertures cylindriques de la culasse et formant un noyau magnétique contenu dans la culasse et autour duquel sont agencés les circuits d'enroulement primaire et secondaire.

Selon encore une autre caractéristique, le circuit d'enroulement primaire et le circuit d'enroulement secondaire du dispositif de filtrage comportent au moins chacun un conducteur de section rectangulaire.

Selon encore une autre caractéristique, le circuit d'enroulement primaire et le circuit d'enroulement secondaire du dispositif de filtrage sont formés à partir d'une bobine ayant deux conducteurs méplats parallèles bobinés les deux conducteurs en main, le circuit d'enroulement secondaire étant réalisé en séparant les conducteurs méplats parallèles aux extrémités de la bobine et en reliant ensemble les deux extrémités d'un des conducteurs méplats bobinés de manière à former le circuit d'enroulement secondaire court-circuité, l'autre conducteur méplat bobiné formant le circuit d'enroulement primaire.

Selon encore une autre caractéristique, les conducteurs du dispositif de filtrage sont bobinés sur au moins deux couches ayant des directions de bobinage opposées, une couche étant bobinée selon une première direction, montante ou descendante, et la couche suivante étant bobinée selon l'autre direction.

Selon une forme de réalisation particulière, le dispositif de filtrage est inséré dans le circuit de puissance de démarreur entre une borne positive de la batterie du véhicule et un contact de puissance du contacteur électromagnétique.

Selon une autre forme de réalisation particulière, le dispositif de filtrage est inséré dans le circuit de puissance de démarreur entre un contact de puissance du contacteur électromagnétique et le moteur électrique. Dans cette forme de réalisation, le dispositif de filtrage est avantageusement fixé sur un carter extérieur du démarreur.

L'invention décrite brièvement ci-dessus procure des solutions permettant d'assurer un niveau élevé de tension de batterie à l'appel de courant, sans que cela soit au détriment de la puissance du démarreur, de sorte que suffisamment de puissance peut être transmise au moteur thermique à basse température pour un démarrage à froid ou un redémarrage à chaud dans de bonnes conditions, c'est-à-dire, avec une tension de batterie élevée au redémarrage et une vitesse à froid suffisante.

De plus, on notera ici que le filtrage passe-bas apporté par le dispositif selon l'invention apporte également un effet bénéfique sur le bruit électrique à hautes fréquences introduit par les commutations mécaniques d'un ensemble balais-collecteur du moteur électrique. Cela apporte un avantage supplémentaire en termes de CEM (compatibilité électromagnétique), notamment la CEM par conduction, ce qui améliore la qualité de tension sur le réseau de bord du véhicule.

L'invention va maintenant être décrite de façon plus détaillée à travers des formes de réalisation particulières de celle-ci, en référence aux dessins annexés, dans lesquels :
Les Figs.1A et 1B montrent des premier et second circuits électriques de démarreur intégrant tous deux un dispositif de filtrage et correspondant à des première et seconde formes de réalisation de l'invention;
La Fig.2 montre des courbes de la tension de batterie obtenues avec et sans intégration du dispositif de filtrage préconisé par l'invention dans le circuit électrique de commande du démarreur;
La Fig.3 est une vue globale en perspective du dispositif de filtrage de l'invention;
Les Figs.4A et 4B sont des première et seconde vues en coupe longitudinale correspondant respectivement à des première et seconde formes de réalisation du dispositif de filtrage de l'invention;
Les Figs.5A et 5B sont des première et seconde vues en perspective éclatées montrant les différents composants formant le dispositif de filtrage de l'invention, respectivement pour les première et seconde formes de réalisation du dispositif montrées en coupe aux Figs.4A et 4B;
La Fig.6 est une vue de côté d'un démarreur équipé du dispositif de filtrage de l'invention; et
La Fig.7 est une vue arrière en perspective du démarreur de la Fig.6.

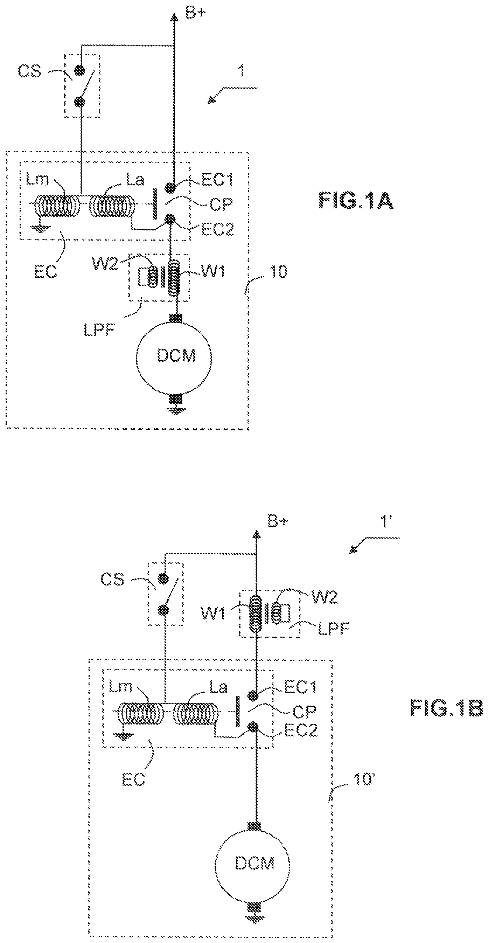

En référence aux Figs.1A et 1B, il est maintenant décrit des premier et second circuits électriques de démarreur 1 et 1' comportant tous deux un dispositif de filtrage LPF et correspondant respectivement à des première et seconde formes de réalisation de l'invention.

Comme cela apparaît dans les Figs.1A et 1B, les circuits électriques de démarreur 1 et 1' ne varient que par l'emplacement d'intégration du dispositif de filtrage LPF dans le circuit de puissance du démarreur. Ce circuit de puissance est celui dans lequel circule le courant de puissance de plusieurs centaines d'Ampères à la mise sous tension du démarreur. Conformément à l'invention, le circuit de puissance est formé par le montage série du dispositif de filtrage LPF, d'un moteur électrique DCM et d'un contact de puissance CP du démarreur, ce contact de puissance CP étant celui d'un contacteur électromagnétique EC du démarreur (appelé également « solénoïde » du démarreur).

Dans la forme de réalisation de la Fig.1A, le dispositif de filtrage LPF équipe le démarreur, repéré ici 10, et est inséré dans le circuit de puissance entre le contacteur électromagnétique EC et le moteur électrique à courant continu DCM. Le contacteur électromagnétique EC et le moteur électrique à courant continu DCM font partie de manière classique d'un démarreur de véhicule automobile.

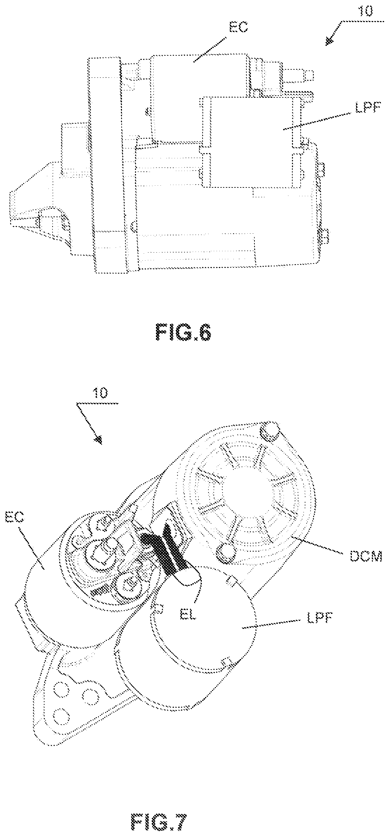

Les Figs.6 et 7 montrent une réalisation concrète d'un démarreur 10 équipé conformément à l'invention. Dans cette réalisation, le dispositif de filtrage LPF est fixé mécaniquement à un carter extérieur du démarreur, à proximité du contacteur EC. Des liaisons électriques EL entre le contacteur EC, le dispositif LPF et le moteur électrique DCM sont montrées à la Fig.7. Le dispositif LPF est électriquement monté en série entre le contact de puissance (non représenté à la Fig.7) du contacteur EC et le moteur DCM, comme dans la configuration de la Fig.1A.

Dans la forme de réalisation de la Fig.1B, le dispositif de filtrage LPF n'est pas intégré dans le démarreur, repéré ici 10', mais est inséré dans le circuit de puissance entre la borne positive B+ de la batterie et le contact de puissance CP.

Le contacteur EC est ici un contacteur classique de démarreur, à simple contact, et comprend un solénoïde formé d'une bobine d'appel La et d'une bobine de maintien Lm et le contact de puissance CP qui comporte des première et seconde bornes EC1 et EC2.

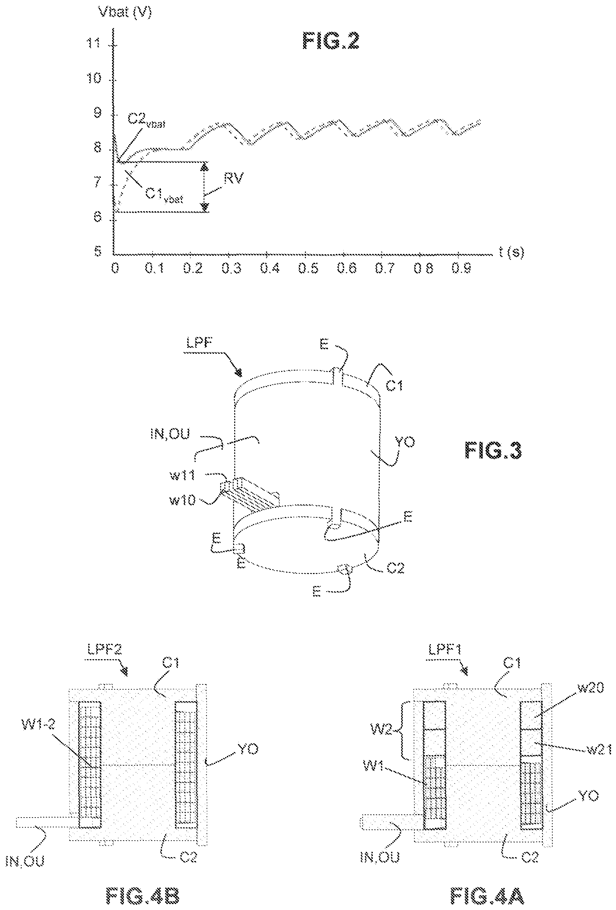

Dans le circuit 1 de la Fig.1A, la borne EC1 est reliée directement à la borne B+ de la batterie et la borne EC2 est reliée à une borne positive du moteur DCM à travers le dispositif de filtrage LPF. Dans le circuit 1' de la Fig.2A, la borne EC1 est reliée à la borne B+ à travers le dispositif de filtrage LPF et la borne EC2 est reliée directement à une borne positive du moteur DCM. Une borne négative du moteur DCM est reliée à la masse électrique du véhicule, pour les deux circuits 1 et 1'.

La fermeture d'un contact de démarrage CS du véhicule commande l'excitation des bobines La et Lm et l'activation du démarreur selon un séquencement bien connu de l'homme du métier et qui ne sera pas détaillé ici. Le contact CS est interposé entre la borne B+ de la batterie et une borne commune des bobines La et Lm à laquelle sont reliées des premières extrémités de celles-ci. Des secondes extrémités des bobines La et Lm sont reliées à la borne EC2 et à la masse électrique du véhicule, respectivement.

Le fort pic initial de courant mentionné plus haut intervient à la fermeture du contact de puissance CP, lorsque le moteur DCM est alimenté à pleine puissance. La borne EC1 est alors reliée électriquement à la borne EC2 par la fermeture du contact de puissance CP et le courant de puissance alimentant le moteur DCM traverse également le dispositif de filtrage LPF.

Comme montré par son schéma électrique représenté aux Figs.1A et 1B, le dispositif de filtrage LPF est ici un dispositif de type inductif qui est réalisé ici sous la forme d'un transformateur de type cuirassé ayant des enroulements couplés magnétiquement. On notera que selon les applications, une simple inductance pourra être utilisée pour former le dispositif de filtrage passe-bas selon l'invention. La forme de réalisation avec un transformateur permet cependant de disposer de plus de paramètres pour ajuster la réponse en fréquence du dispositif LPF en fonction de l'application. Ainsi, il est possible d'optimiser cette réponse en réglant les inductances des circuits primaire et secondaire et la mutuelle inductance introduite par le couplage entre ces circuits. Typiquement, l'inductance équivalente du dispositif de filtrage inductif LPF sera comprise entre 0,1 et 10 mH environ pour des courants ayant un ordre de grandeur de 300 à 1000 A.

Le dispositif LPF comporte donc un circuit d'enroulement primaire W1 et un circuit d'enroulement secondaire W2. Le circuit d'enroulement primaire W1 est celui qui est inséré dans le circuit de puissance du démarreur. Le circuit d'enroulement secondaire W2 est court-circuité comme montré dans les Figs.1A et 1B.

En référence à la Fig.2, l'effet technique principal du dispositif LPF consistant en un rehaussement de la tension de batterie, repérée Vbat, est maintenant décrit. Dans cet exemple, il s'agit d'une batterie de 12V telle que trouvée habituellement dans les véhicules automobiles.

La Fig.2 montre deux courbes, C1_{vbat} et C2_{vbat}, correspondant respectivement à la tension de batterie Vbat obtenue sans et avec le dispositif de filtrage LPF. La courbe C1_{vbat} est représentée en trait pointillé. La courbe C2_{vbat} est représentée en trait plein.

Les courbes C1_{vbat} et C2_{vbat} ont été relevées par l'entité inventive dans le cas d'un circuit de démarreur comprenant un démarreur de type à inducteur bobiné (le démarreur référencé ESW20 - marque déposée - de la société VALEO). Comme montré à la Fig.2, le rehaussement RV introduit par le dispositif de filtrage LPF sur la tension Vbat lors du pic initial de courant a été mesuré ici de 1,4 V.

D'autres essais réalisés par l'entité inventive ont montré que l'invention autorise un résultat encore meilleur dans le cas d'un démarreur de type à inducteur à aimants permanents. Par exemple, le rehaussement RV de la tension Vbat est de 1,6 V avec un démarreur à aimants permanents référencé ESM18 (marque déposée) de la société VALEO.

L'effet de rehaussement de la tension de batterie obtenu découle du fait qu'à la mise sous tension du moteur DCM, le pic initial de courant est coupé (atténué d'environ la moitié) en raison de la production de forts courants induits dans le circuit secondaire court-circuité, qui s'opposent à la brutale variation de flux magnétique qui les génère.

Le niveau de la tension de batterie se trouve notablement rehaussé par l'effet de filtrage des fréquences hautes du spectre de fréquence du pic de courant. Par contre, aux fréquences beaucoup plus faibles qui caractérisent le fonctionnement avec acyclisme du moteur thermique, les variations de courant sont conservées quasi-intactes, avec une très faible atténuation (quelques pourcents seulement), et la qualité de l'entraînement du moteur thermique n'en souffre donc pas. Le dispositif de filtrage LPF de l'invention est équivalent à un filtre passe-bas de puissance avec une fréquence de coupure haute qui doit être située au-delà de la bande de fréquence correspondant au fonctionnement avec acyclisme du moteur thermique.

En référence aussi aux Figs.3, 4A, 4B et 5A, 5B, il est maintenant décrit ci-dessous, de manière détaillée, deux formes de réalisation du dispositif de filtrage LPF de l'invention.

Comme cela apparaît à la Fig.3, ainsi qu'aux Figs.6 et 7, le dispositif LPF se présente extérieurement sous la forme d'un cylindre de forme et de volume proches de ceux du contacteur EC. Typiquement, le dispositif LPF peut être réalisé avec un diamètre compris entre environ 40 et 50 mm.

Dans les formes de réalisation décrites ici, le dispositif LPF comporte essentiellement une carcasse en matériau magnétique telle que l'acier, par exemple un acier de type XC6 ou XC10, et des circuits d'enroulement primaire W1 et secondaire W2 en cuivre. La carcasse est formée de deux pièces de noyau C1 et C2 et d'une culasse YO.

Les pièces de noyau C1 et C2 sont des pièces globalement cylindriques qui sont insérées dans des ouvertures cylindriques opposées de la culasse YO de manière à fermer celles-ci et former un noyau magnétique contenu dans la culasse YO autour duquel sont agencés les circuits d'enroulement primaire W1 et secondaire W2. Le diamètre des pièces de noyau C1, C2, à l'intérieur de la culasse YO, est inférieur au diamètre intérieur de la culasse YO de manière à laisser un espace libre occupé par les circuits d'enroulement primaire W1 et secondaire W2.

Comme cela apparaît notamment à la Fig.3, la culasse YO comporte des ergots E qui s'insèrent dans des encoches correspondantes aménagées dans les pièces de noyau C1, C2. Ces ergots 2 s'insèrent avec serrage dans les encoches et assurent ainsi l'assemblage mécanique du dispositif LPF. On notera ici que cet assemblage devra être effectué avec le plus grand soin de manière à éviter tout entrefer non voulu au niveau des jonctions entre les pièces de la carcasse.

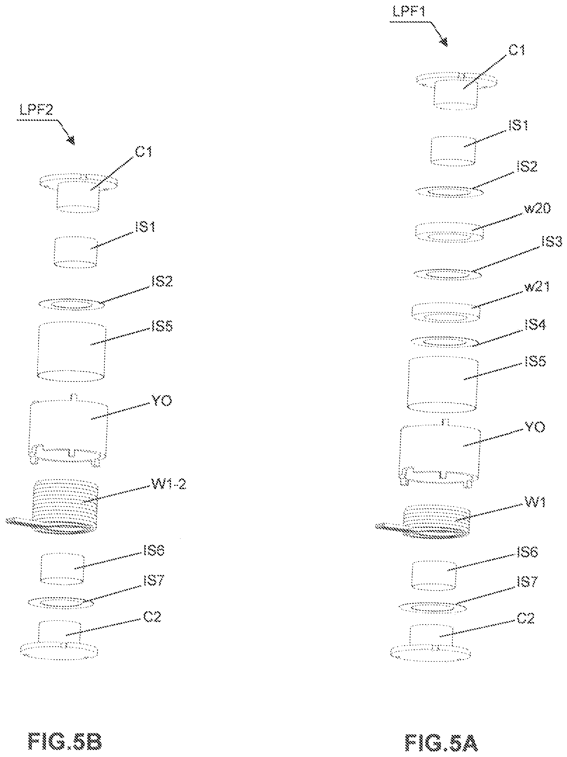

Les Figs.4A et 5A montrent une première forme de réalisation LPF1 du dispositif de filtrage de l'invention.

Le dispositif LPF1 comprend un circuit d'enroulement primaire W1 formé de deux conducteurs méplats, parallèles et jointifs (conducteurs w10, w11 visibles à la Fig.3). Les conducteurs w10, w11 sont isolés électriquement par une couche de vernis et sont bobinés les deux conducteurs en main sur deux couches afin de former le circuit d'enroulement primaire W1. Une première couche est bobinée selon une direction montante et la deuxième couche est bobinée selon une direction descendante. Dans cet exemple de réalisation, le nombre de spires du circuit d'enroulement primaire W1 est de 12. Les deux extrémités du circuit d'enroulement primaire W1 émergent à l'extérieur de la culasse YO et forment des entrées de courant IN et sortie de courant OU du dispositif.

On notera, en variantes de réalisation, que le circuit d'enroulement primaire W1 pourra être formé d'un seul conducteur méplat ou d'un nombre de conducteurs méplats supérieur à deux. Le choix d'un nombre de conducteurs supérieur à un peut être dicté par une contrainte de courbure importante ou par la nécessité de limiter l'influence de l'effet de peau. De plus, dans certaines variantes, le circuit d'enroulement primaire W1 sera formé en une seule couche ou en un nombre de couches supérieur à deux.

Dans le dispositif LPF1, le circuit d'enroulement secondaire W2 court-circuité comprend deux conducteurs en cuivre formant des bagues w20 et w21 de section rectangulaire qui sont insérées dans la pièce de noyau C1. Dans d'autres réalisations, on pourra avoir une seule bague ou un nombre de bagues supérieur à deux.

On notera que l'utilisation de conducteurs de section rectangulaire (conducteurs méplats de W1 et bagues w20, w21) autorise, par rapport au fil rond, un taux de remplissage de cuivre plus élevé dans le logement de la carcasse réservé aux circuits d'enroulement W1 et W2.

L'assemblage du dispositif de filtrage LPF1 est montré à la Fig.5A. Outre les composants C1, C2, YO, W1 et W2 déjà décrits ci-dessus, le dispositif LPF1 comprend également des éléments formant isolants électriques, repérés IS1 à IS7. De préférence, les circuits d'enroulement W1 et W2 (w20, w21) seront isolés entre eux et isolés de la carcasse métallique (C1, C2 et YO).

Les éléments isolants IS1 à IS7 sont formés par exemple en papier isolant. Les éléments IS1, IS5 et IS6 sont enroulés de manière à former des tubes de papier isolant. Les éléments IS2, IS3, IS4 et IS7 sont des couronnes de papier isolant.

Les tubes IS1 et IS6 s'insèrent dans les pièces de noyau C1 et C2 respectivement et recouvrent les surfaces cylindriques de celles-ci, à l'intérieur de la culasse YO. Le tube IS5 a un diamètre sensiblement égal au diamètre intérieur de la culasse YO est recouvre la surface intérieure de celle-ci.

Les couronnes IS2, IS3, IS4 et IS7 ont un diamètre intérieur légèrement supérieur au diamètre intérieur des pièces de noyau C1, C2, de manière à s'insérer dans celles-ci qui sont revêtues des tubes IS1, IS6. Le diamètre extérieur des couronnes IS2, IS3, IS4 et IS7 est légèrement inférieur au diamètre intérieur de la culasse YO de manière s'insérer à l'intérieur de celle-ci qui est revêtue du tube IS5.

La couronne IS2 assure l'isolation de la partie supérieure de la bague w20 par rapport à une partie formant collerette extérieure de la pièce de noyau C1. La couronne IS3 assure l'isolation de la partie inférieure de la bague w20 par rapport à la partie supérieure de la bague w21. La couronne IS4 assure l'isolation de la partie inférieure de la bague w21 par rapport à la partie supérieure du circuit d'enroulement primaire W1. La couronne IS7 assure l'isolation de la partie inférieure du circuit d'enroulement primaire W1 par rapport à la partie formant collerette extérieure de la pièce de noyau C2. On notera ici que les couronnes IS2 et IS7 devront être mises en place avec soin de manière à éviter toute création involontaire d'un entrefer entre une pièce de noyau C1, C2 et la culasse YO, par exemple par interposition entre ces éléments d'un morceau du papier isolant formant ces couronnes.

Les Figs.4B et 5B montrent une seconde forme de réalisation LPF2 du dispositif de filtrage de l'invention.

Le dispositif LPF2 se différencie essentiellement du dispositif LPF1 par les circuits d'enroulement primaire W1 et secondaire W2. Dans le dispositif LPF2, les bagues en cuivre w20 et w21 formant le circuit d'enroulement secondaire W2 sont supprimées. Le circuit d'enroulement secondaire W2 est formé de manière imbriquée avec le circuit d'enroulement primaire W1. Il est formé ici une bobine W1-2 de manière analogue à la bobine formant le circuit d'enroulement primaire W1 du dispositif LPF1. Deux conducteurs méplats isolés par vernis, parallèles et jointifs, sont bobinés les deux conducteurs en main sur deux couches. Une première couche est bobinée selon une direction montante et la deuxième couche est bobinée selon une direction descendante. Par rapport au dispositif LPF1, la bobine W1-2 ainsi réalisée a davantage de spires, 22 spires, et une hauteur supérieure, remplissant ainsi de cuivre l'espace laissé vide par la suppression des bagues w20 et w21.

A partir de la bobine W1-2, le circuit d'enroulement secondaire W2 est réalisé en séparant les conducteurs méplats parallèles aux extrémités de la bobine W1-2 et en reliant ensemble les deux extrémités d'un des conducteurs méplats bobinés de manière à former le circuit d'enroulement secondaire W2 court-circuité. L'autre conducteur méplat bobiné forme le circuit d'enroulement primaire W1 et ses extrémités émergeant hors de la culasse YO forment les entrée et sortie de courant IN et OU.

Cette forme de réalisation LPF2 présente l'avantage, par rapport au dispositif LPF1, d'un coefficient de couplage magnétique sensiblement augmenté, proche de 1, entre les circuits d'enroulement primaire W1 et secondaire W2. De plus, le nombre de spires est supérieur à celui de LPF1, ce qui permet d'accroître les valeurs d'inductance du dispositif. La densité de courant dans le circuit W1 est plus faible dans LPF2 par rapport à LPF1, du fait d'un volume de cuivre moindre. Cependant, le pic initial de courant de très forte intensité a une durée très courte (quelque millisecondes) et aux fréquences plus basses, après le pic de courant, le circuit d'enroulement secondaire W2, du fait de bons échanges thermiques avec W1, compense l'élévation des pertes Joule (RI²) dues à la diminution de volume de cuivre dans le circuit primaire W1, ce qui permet d'obtenir une capacité thermique totale équivalente à celle du dispositif LPF1.

## Revendications

1. Circuit électrique de démarrage (1, 1') pour véhicule automobile comprenant un démarreur (10, 10') et un dispositif de rehaussement de tension de batterie, ledit démarreur (10, 10') comprenant un moteur électrique (DCM) et un contacteur électromagnétique (EC), ledit dispositif de rehaussement de tension de batterie étant destiné à empêcher une chute de la tension de batterie (Vbat) produite par un pic de courant intervenant dans un circuit de puissance dudit démarreur (10, 10') à la mise sous tension de celui-ci, **caractérisée en ce que** ledit dispositif de rehaussement de tension de batterie est un dispositif de filtrage de type inductif qui est monté en série avec ledit moteur électrique (DCM) dans ledit circuit de puissance et comprenant une carcasse en matériau magnétique (C1, C2, YO), un circuit d'enroulement primaire (W1) destiné à s'insérer en série dans ledit circuit de puissance, et un circuit d'enroulement secondaire (W2) en court-circuit.

2. Circuit selon la revendication 1, **caractérisée en ce que** ladite carcasse en matériau magnétique dudit dispositif de filtrage comporte une culasse (YO) et des première et seconde pièces de noyau (C1, C2), lesdites pièces de noyau (C1, C2) fermant des ouvertures cylindriques de ladite culasse (YO) et formant un noyau magnétique contenu dans ladite culasse (YO) et autour duquel sont agencés lesdits circuits d'enroulement primaire (W1) et secondaire (W2).

3. Circuit selon la revendication 1 ou 2, **caractérisée en ce que** ledit circuit d'enroulement primaire (W1) et ledit circuit d'enroulement secondaire (W2) dudit dispositif de filtrage comportent au moins chacun un conducteur de section rectangulaire.

4. Circuit selon la revendication 1 ou 2, **caractérisée en ce que** ledit circuit d'enroulement primaire (W1) et ledit circuit d'enroulement secondaire (W2) dudit dispositif de filtrage sont formés à partir d'une bobine (W1-2) ayant deux conducteurs méplats parallèles bobinés les deux conducteurs en main, ledit circuit d'enroulement secondaire (W2) étant réalisé en séparant lesdits conducteurs méplats parallèles aux extrémités de ladite bobine (W1-2) et en reliant ensemble les deux extrémités d'un desdits conducteurs méplats bobinés de manière à former ledit circuit d'enroulement secondaire (W2) court-circuité, l'autre conducteur méplat bobiné formant ledit circuit d'enroulement primaire (W1).

5. Circuit selon la revendication 4, **caractérisée en ce que** lesdits conducteurs dudit dispositif de filtrage sont bobinés sur au moins deux couches ayant des directions de bobinage opposées, une couche étant bobinée selon une première direction, montante ou descendante, et la couche suivante étant bobinée selon l'autre direction.

6. Circuit selon l'une quelconque des revendications 1 à 5, **caractérisée en ce que** ledit dispositif de filtrage (LPF) est inséré dans ledit circuit de puissance de démarreur (1') entre une borne positive (B+) de la batterie du véhicule et un contact de puissance (CP) dudit contacteur électromagnétique (EC).

7. Circuit selon l'une quelconque des revendications 1 à 5, **caractérisée en ce que** ledit dispositif de filtrage (LPF) est inséré dans ledit circuit de puissance de démarreur (1) entre un contact de puissance (CP) dudit contacteur électromagnétique (EC) et ledit moteur électrique (DCM).

8. Circuit selon la revendication 7, **caractérisée en ce que** ledit dispositif de filtrage (LPF) est fixé sur un carter extérieur du démarreur.

## Patentansprüche

1. Elektrische Anlasserschaltung (1, 1') für ein Kraftfahrzeug, umfassend einen Anlasser (10, 10') und eine Vorrichtung zur Verstärkung der Batteriespannung, wobei der Anlasser (10, 10') einen Elektromotor (DCM) und einen elektromagnetischen Schalter (EC) umfasst, wobei die Vorrichtung zur Verstärkung der Batteriespannung dazu bestimmt ist, einen Abfall der Batteriespannung (Vbat) zu verhindern, der durch eine Stromspitze erzeugt wird, die in einer Leistungsschaltung des Anlassers (10, 10') auftritt, wenn diese unter Spannung gesetzt wird,
**dadurch gekennzeichnet, dass** die Vorrichtung zur Verstärkung der Batteriespannung eine Filtervorrichtung vom induktiven Typ ist, die in Serie mit dem Elektromotor (DCM) in der Leistungsschaltung angeordnet ist, und umfassend eine Karkasse (C1, C2, YO) aus magnetischem Material, eine Primärwicklungsschaltung (W1), die dazu bestimmt ist, in Serie in die Leistungsschaltung eingesetzt zu werden, und eine kurzgeschlossene Sekundärwicklungsschaltung (W2).

2. Schaltung nach Anspruch 1,
**dadurch gekennzeichnet, dass** die Karkasse aus magnetischem Material der Filtervorrichtung einen Zylinderkopf (YO) und ein primäres und sekundäres Kernstück (C1, C2) umfasst, wobei die Kernstücke (C1, C2) zylindrische Öffnungen des Zylinderkopfs (YO) verschließen und einen Magnetkern bilden, der in dem Zylinderkopf (YO) enthalten ist, und um den die Primär- (W1) und Sekundärwicklungsschaltung (W2) angeordnet sind.

3. Schaltung nach Anspruch 1 oder 2,
**dadurch gekennzeichnet, dass** die Primärwicklungsschaltung (W1) und die Sekundärwicklungsschaltung (W2) der Filtervorrichtung mindestens jeweils einen Leiter mit rechteckigem Querschnitt aufweisen.

4. Schaltung nach Anspruch 1 oder 2,
**dadurch gekennzeichnet, dass** die Primärwicklungsschaltung (W1) und die Sekundärwicklungsschaltung (W2) der Filtervorrichtung aus einer Spule (W1-2) mit zwei flachen parallelen Leitern gebildet sind, wobei die beiden Leiter aneinander angrenzend aufgewickelt sind, wobei die Sekundärwicklungsschaltung (W2) hergestellt wird, indem die flachen parallelen Leiter an den Enden der Spule (W1-2) getrennt werden und indem die beiden Enden eines der gewickelten flachen Leiter derart verbunden werden, dass die kurzgeschlossene Sekundärwicklungsschaltung (W2) gebildet wird, wobei der andere gewickelte flache Leiter die Primärwicklungsschaltung (W1) bildet.

5. Schaltung nach Anspruch 4,
**dadurch gekennzeichnet, dass** die beiden Leiter der Filtervorrichtung auf mindestens zwei Schichten mit entgegengesetzten Wicklungsrichtungen gewickelt sind, wobei eine Schicht in einer ersten Richtung, aufsteigend oder absteigend, gewickelt ist, und die folgende Schicht in der anderen Richtung gewickelt ist.

6. Schaltung nach einem der Ansprüche 1 bis 5,
**dadurch gekennzeichnet, dass** die Filtervorrichtung (LPF) in der Leistungsschaltung des Anlassers (1') zwischen einem positiven Anschluss (B+) der Fahrzeugbatterie und einem Leistungskontakt (CP) des elektromagnetischen Schalters (EC) eingesetzt ist.

7. Schaltung nach einem der Ansprüche 1 bis 5,
**dadurch gekennzeichnet, dass** die Filtervorrichtung (LPF) in der Leistungsschaltung des Anlassers (1) zwischen einem Leistungskontakt (CP) des elektromagnetischen Schalters (EC) und dem Elektromotor (DCM) eingesetzt ist.

8. Schaltung nach Anspruch 7,
**dadurch gekennzeichnet, dass** die Filtervorrichtung (LPF) an einem Außengehäuse des Anlassers befestigt ist.

## Claims

1. Electric starter circuit (1, 1') for an automotive vehicle comprising a starter (10, 10') and a device for stepping up the battery voltage, said starter (10, 10') comprising an electric motor (DCM) and an electromagnetic contactor (EC), said device for stepping up the battery voltage being intended to prevent a drop in the battery voltage (Vbat) caused by a current spike occurring in a power circuit of said starter (10, 10') upon activation thereof, **characterized in that** said device for stepping up the battery voltage is an inductive filtering device that is connected in series with said electric motor (DCM) in said power circuit and comprises a yoke made of magnetic material (C1, C2, YO), a primary winding circuit (W1) that is intended to be inserted in series into said power circuit, and a secondary winding circuit (W2) connected as a short circuit.

2. Circuit according to Claim 1, **characterized in that** said yoke made of magnetic material of said filtering device includes a frame (YO) and first and second core parts (C1, C2), said core parts (C1, C2) closing off cylindrical openings in said frame (YO) and forming a magnetic core contained within said frame (YO) and around which said primary (W1) and secondary (W2) winding circuits are arranged.

3. Circuit according to Claim 1 or 2, **characterized in that** said primary winding circuit (W1) and said secondary winding circuit (W2) of said filtering device each include at least one conductor having a rectangular cross section.

4. Circuit according to Claim 1 or 2, **characterized in that** said primary winding circuit (W1) and said secondary winding circuit (W2) of said filtering device are formed from a coil (W1-2) having two parallel flat conductors, the two conductors being coiled contiguously, said secondary winding circuit (W2) being produced by separating said parallel flat conductors at the ends of said coil (W1-2) and linking the two ends of one of said coiled flat conductors together so as to form said shorted secondary winding circuit (W2), the other coiled flat conductor forming said primary winding circuit (W1).

5. Circuit according to Claim 4, **characterized in that** said conductors of said filtering device are coiled over at least two layers having opposite directions of coiling, one layer being coiled in a first, ascending or descending, direction, and the following layer being coiled in the other direction.

6. Circuit according to any one of Claims 1 to 5, **characterized in that** said filtering device (LPF) is inserted into said starter power circuit (1') between a positive terminal (B+) of the battery of the vehicle and a power contact (CP) of said electromagnetic contactor (EC).

7. Circuit according to any one of Claims 1 to 5, **characterized in that** said filtering device (LPF) is inserted into said starter power circuit (1) between a power contact (CP) of said electromagnetic contactor (EC) and said electric motor (DCM).

8. Circuit according to Claim 7, **characterized in that** said filtering device (LPF) is attached to an external casing of the starter.
